# EUROPÄISCHE PATENTANMELDUNG

(11) **EP 3 447 464 A1**
(43) Veröffentlichungstag der Anmeldung: **27.02.2019**
(21) Anmeldenummer: 18188342.2
(22) Anmeldetag: 09.08.2018
(51) Int. Cl.: G01L 1/18, B25J 19/06, B60R 21/00, F16P 3/12, G01L 1/22, G01L 5/00

(54) **SCHUTZEINRICHTUNG MIT TAKTILER KOLLISIONSERFASSUNG FÜR EIN BAUTEIL**

(30) Priorität: 22.08.2017 DE 102017119152
(71) Anmelder: Mayser Holding GmbH & Co. KG, 88161 Lindenberg i. Allgäu (DE)
(72) Erfinder: Jordan, Manfred, 88161 Lindenberg (DE)
(74) Vertreter: Kaufmann, Sigfrid

(57) **Zusammenfassung**

Die Erfindung betrifft eine Schutzeinrichtung mit integrierter, taktiler Kollisionserfassung zum Erfassen einer Kollision zwischen einem Bauteil und einem Gegenstand oder einer Person. Das Bauteil kann z. B. ein motorgetrieben bewegbares Teil einer Maschine sein, etwa ein Roboterarm.

Die Schutzeinrichtung umfasst eine Auswerteeinheit (5) und einen Sicherheitsüberzug (10), bestehend aus einer elastisch verformbaren Trägerschicht (1), einer elastisch komprimierbaren Detektionsschicht (2) zur Kollisionserfassung, aufweisend eine Vielzahl von Hohlräumen (11) mit jeweils zueinander beabstandet angeordneten Elektroden (2.1, 2.2) und elastisch komprimierbare Abstandhalter (2.3) aus einem Schaummaterial oder einem Abstandsgewirk, einem Stoßabsorptionskörper (3) und einer Außenhülle (4). Die Auswerteeinheit (5) ist mit den Elektroden (2.1, 2.2) elektrisch verbunden, wobei die Auswerteeinheit (5) eingerichtet ist, nach Anlegen einer Gleich- oder Wechselspannung an wenigstens eine der Elektroden (2.1, 2.2) ein Kollisionsereignis aus einer Änderung des elektrischen Widerstandes zwischen den Elektroden (2.1, 2.2) zu ermitteln.

## Beschreibung

Die Erfindung betrifft eine Vorrichtung mit integrierter taktiler Kollisionserfassung für ein Bauteil, z. B. ortsfesten oder autonom bewegten Handhabungsgeräten wie Fertigungs-, Transport-, Inspektions- oder Serviceroboter und ihrer Manipulatoren, zum Schutze von Personen und ortsfesten oder autonom bewegten Hindernissen vor Kollisionen mit dem Bauteil.

Der Schutz vor Kollisionen ist z. B. in der Medizintechnik und beim Einsatz von Industrierobotern von großer Bedeutung. So muss z. B. beim Einsatz von medizinischen Geräten mit motorgetrieben bewegbaren Bauteilen sichergestellt werden, dass die Bewegung eines solchen Bauteils bei Kontakt bzw. Kollision mit einer Person (z. B. einem mittels des medizinischen Geräts zu untersuchenden Patienten) weder zu Verletzungen der Person noch zu Schäden an dem Bauteil führen. Als ein anderes Beispiel muss beim Einsatz von Industrierobotern mit bewegbaren Bauteilen (z. B. einem Roboterarm) sichergestellt werden, dass bei einem planmäßigen oder auch außerplanmäßigen Kontakt mit einem Gegenstand oder einer Person das Schadens- bzw. Verletzungsrisiko minimiert wird.

Es ist bekannt, die Manipulatoren eines Roboters mit starren oder weichen Schutzhüllen zu umgeben. Durch die Schutzhüllen soll der mögliche Aufprall gedämpft werden. Zur Erzielung einer hohen Dämpfungswirkung ist hierbei eine relativ wuchtige Schutzhülle erforderlich. Aufgrund der zusätzlichen Masse durch die Schutzhüllen ist die Bewegungsgeschwindigkeit der Manipulatoren beschränkt, da andernfalls der Impuls der Manipulatoren zu groß wäre und Verletzungen hervorgerufen würden. Außerdem bieten derartige Schutzhüllen lediglich einen passiven Schutz.

Für einen proaktiven Schutz sind induktiv oder kapazitiv arbeitende Näherungssensoren bekannt, um eine Detektion möglicher Kollisionen zu gewährleisten. Aus der DE 10 2008 034 937 A1 ist beispielsweise ein Abstandsgewirke als Drucksensor zur Verwendung in Fahrzeugsitzen bekannt. Das Abstandsgewirke weist auf seiner Ober- und Unterseite elektrisch leitende Flächen auf, die jeweils von eingewebten Leiterfäden gebildet werden. Hierbei fungiert die leitende Fläche der Unterseite als Abschirmung, um fehlerhafte Messungen mittels der leitenden Fläche der Oberseite zu vermeiden.

DE 10 2015 014 317 A1 beschreibt ein Sensorsystem und ein Verfahren zum kapazitiven und ortsaufgelösten Detektieren einer Annäherung und Berührung an z. B. einen Roboter, wobei das Sensorsystem eine Vielzahl von Sensormodulen, bestehend jeweils aus einer Deckschicht mit einer Vielzahl von elektrisch leitfähigen Deckelektroden, einer elektrisch leitfähigen Bodenelektrode sowie einer zwischen der Deckschicht und der Bodenelektrode angeordneten Zwischenschicht, die verformbar und elektrisch isolierend ist.

Bei den kapazitiven Verfahren besteht jedoch grundsätzlich die Problematik, dass die zu erfassenden Messsignale sehr schwach sind, sodass eine aufwendige Filterung der Kollisionssignale aus dem Rauschhintergrund notwendig ist.

Zum Erfassen einer Kollision können außerdem drucksensitive Schaltmatten eingesetzt werden. Die DE 10 2010 010 873 A1 beschreibt die Verwendung einer elektrischen Schaltmatte als drucksensitive Schicht in einer Vorrichtung zur Erkennung einer Kollision, wobei die Schaltmatte z. B. an der Außenseite eines Verkleidungsteils eines medizinischen Geräts angeordnet ist. Eine weitere drucksensitive Matte, bestehend aus zwei leitfähigen Gummimatten, die durch isolierende Gummistege getrennt sind, ist in EP 0 395 784 A1 offenbart.

Die Verwendung derartiger, vergleichsweise steifer Schaltmatten kann jedoch z. B. beim Abdecken von Kanten und unregelmäßigen Flächen eines mit einer kollisionsempfindlichen Außenhülle zu versehenden Bauteils problematisch sein. Des Weiteren leiden diese Schaltmatten zumeist an unzureichender Robustheit.

Aufgabe der Erfindung ist es, eine Schutzeinrichtung mit taktiler Kollisionserfassung bereitzustellen, die bei guter Robustheit sowohl einen passiven Schutz bietet als auch aktiv eine Kollision detektiert, wobei sie unkompliziert aufgebaut und somit kostengünstig herstellbar sein soll. Zusätzlich soll die Schutzeinrichtung ein geringes Gewicht besitzen sowie flexibel an beliebige Oberflächengeometrien der mit ihr auszustattenden Bauteile anpassbar sein.

Diese Aufgabe wird durch die Schutzeinrichtung mit den Merkmalen des ersten Anspruches gelöst; vorteilhafte Ausführungsformen sind Gegenstand der Unteransprüche.

Die erfindungsgemäße Schutzeinrichtung weist wenigstens einen flexiblen, zumindest auf einen Teil der Oberfläche des mit der Schutzeinrichtung auszustattenden Bauteils formangepasst aufbringbaren, elastisch komprimierbaren Sicherheitsüberzug mit Kollisionserfassung und eine mit der Kollisionserfassung verbundene Auswerteeinheit auf.

Im Folgenden wird der Einfachheit halber meist im Singular von "dem Sicherheitsüberzug" gesprochen, womit jedoch die jeweils vorliegenden Sicherheitsüberzüge bezeichnet sind und somit auch der Fall von mehreren Sicherheitsüberzügen der Schutzeinrichtung umfasst sein soll, soweit sich nicht aus dem Kontext etwas anderes ergibt.

Der Sicherheitsüberzug umfasst wenigstens einen, weitestgehend flächenhaft ausgebildeten Stoßabsorptionskörper aus einem elastisch komprimierbaren, vorzugsweise elektrisch isolierenden Material. Der Stoßabsorptionskörper besitzt z. B. die Form einer Platte oder einer Schale. Aufgrund dieser geometrischen Form weist der Stoßabsorptionskörper zwei großflächige Oberflächenbereiche auf, die im Folgenden als Außenfläche und als Innenfläche bezeichnet werden. Auf der im bestimmungsgemäßen Gebrauch des Sicherheitsüberzuges in Richtung hin zu dem Bauteil weisenden Innenfläche des Stoßabsorptionskörpers ist eine Detektionsschicht angeordnet, die ein Bestandteil der Kollisionserfassung bzw. Kollisionserfassungsvorrichtung ist. Die Detektionsschicht ist vorzugsweise stoffschlüssig, zumindest jedoch formschlüssig mit dem Stoßabsorptionskörper verbunden.

Aufgrund ihrer geometrischen Form weist die Detektionsschicht ebenso zwei großflächige Oberflächenbereiche auf, die im Folgenden als Oberseite und als Unterseite (der Detektionsschicht) bezeichnet werden, wobei im bestimmungsgemäßen Gebrauch die Unterseite in Richtung hin zu dem Bauteil, auf welches der Sicherheitsüberzug aufgebracht ist, und die Oberseite in Richtung Stoßabsorptionskörper, d. h. weg von dem Bauteil, weist.

Die Detektionsschicht beinhaltet eine Vielzahl von Abstandhaltern aus einem elastisch komprimierbaren Material, die innerhalb der Detektionsschicht nebeneinander und zueinander beabstandet angeordnet sind. Weiterhin beinhaltet die Detektionsschicht, eine zumindest der Anzahl der Abstandhalter entsprechende Anzahl an Hohlräumen sowie eine oder mehrere obere und eine oder mehrere untere Elektroden. Die oberen Elektroden sind hierbei im Bereich der Oberseite und die unteren Elektroden im Bereich der Unterseite der Detektionsschicht angeordnet. Vorzugsweise sind zumindest die unteren Elektroden innerhalb dieser Hohlräume der Detektionsschicht angeordnet. Die oberen Elektroden können ebenfalls innerhalb dieser Hohlräume (und zu den unteren Elektroden beabstandet) angeordnet sein, die Hohlräume überspannen oder als eine flächenhafte Abdeckung der Hohlräume ausgebildet sein.

Auf der Unterseite, d. h. dem dem Stoßabsorptionskörper gegenüberliegenden Oberflächenbereich, der Detektionsschicht befindet sich eine Trägerschicht, die die Detektionsschicht mittelbar oder unmittelbar kontaktiert. Im bestimmungsgemäßen Gebrauch des Sicherheitsüberzuges kontaktiert die Trägerschicht mit ihrer der Detektionsschicht gegenüberliegenden Seite denjenigen Oberflächenbereich des Bauteils, an der ein Kollisionsschutz vorgesehen ist (im Folgenden als "Kollisionsschutzfläche" bezeichnet).

Erfindungsgemäß sind zumindest der Stoßabsorptionskörper und die Detektionsschicht elastisch komprimierbar, wobei die Elastizität im Bereich der Unterseite der Detektionsschicht geringer als im Bereich der Außenfläche des Stoßabsorptionskörpers ist, d. h., der Sicherheitsüberzug ist im Bereich der Unterseite der Detektionsschicht härter als im Bereich der Außenfläche des Stoßabsorptionskörpers. Diese Änderung der Elastizität bzw. Härte kann sowohl sprunghaft, d. h. an einer oder mehreren Grenzflächen, z. B an der Grenzfläche zwischen Detektionsschicht und Stoßabsorptionskörper, als auch in Teilbereichen oder vollständig kontinuierlich, d. h. stetig, erfolgen.

Es kann vorgesehen sein, dass zwischen der Detektionsschicht und der Trägerschicht eine zusätzliche, elastisch komprimierbare Stoßabsorptionsschicht, im Folgenden "Hinterfütterungsschicht" genannt, angeordnet ist. Diese Hinterfütterungsschicht ist vorzugsweise aus einem elastisch komprimierbaren und elektrisch isolierenden Weichschaum, z. B. Polyurethan-Weichschaum.

Des Weiteren weist der Sicherheitsüberzug der Schutzeinrichtung eine elastisch verformbare, vorzugsweise elektrisch isolierende Außenhülle auf, die derart ausgebildet und angeordnet ist, dass von ihr der Stoßabsorptionskörper auf seiner Außenfläche vollständig sowie flüssigkeitsdicht überdeckt ist. Vorzugsweise ist die Außenhülle der Außenkontur des Stoßabsorptionskörpers formangepasst und, z. B. diesen kontaktierend, auf denselben angeordnet, wobei sie insbesondere stoffschlüssig mit der jeweiligen Außenfläche des Stoßabsorptionskörpers verbunden sein kann. Die Außenhülle kann z. B. mittels Klebens an der Außenfläche befestigt sein.

Um den Sicherheitsüberzug, beispielsweise einen einstückigen oder einen aus mehreren Einzelstücken bestehenden Sicherheitsüberzug, auf dem Bauteil lösbar befestigen bzw. fixieren zu können, kann der Sicherheitsüberzug Befestigungsmittel aufweisen, sodass ein weitestgehend der Form des Oberflächenbereichs des Bauteils, an der ein Kollisionsschutz vorgesehen ist, d. h. der Kollisionsschutzfläche, formangepasster Hohlkörper ausbildbar ist, der diese Kollisionsschutzfläche vollständig abdeckt bzw. umschließt.

Die Schutzeinrichtung umfasst außerdem eine Auswerteeinheit, die elektrisch, z. B. mittels entsprechender Elektrokabel, mit den beiden Elektroden, d. h. den oberen und den unteren Elektroden, jedes Sicherheitsüberzuges verbunden ist.

Bei mehreren Sicherheitsüberzügen der Schutzeinrichtung können diese, d. h. ihre oberen bzw. unteren Elektroden, verbunden, d. h. zwischen den Sicherheitsüberzügen kontaktiert, oder innerhalb der Auswerteeinheit gekoppelt werden. Dies kann sowohl seriell, als auch parallel, jeweils für alle unteren bzw. oberen Elektroden erfolgen.

Die Auswerteeinheit ist eingerichtet, an eine, d. h. die obere oder die untere, oder an beide, d. h. die obere und die untere, Elektroden eine elektrische Spannung anzulegen, wobei im letzteren Fall die Polarität der Spannung bevorzugt an der oberen Elektrode unterschiedlich zu der Polarität an der unteren Elektrode ist. Hierbei sind von der Auswerteeinheit sowohl eine Gleich- als auch eine Wechselspannung generierbar. Weiterhin ist die Auswerteeinheit eingerichtet, einen elektrischen Widerstand zwischen den oberen und den unteren Elektroden zu erfassen und basierend auf dem erfassten Wert des elektrischen Widerstandes ein Signal, z. B. ein Warnsignal, zu generieren. Bei Anliegen einer Wechselspannung an einer oder beiden der Elektroden wird der Wechselstromwiderstand (auch bekannt als Impedanz) erfasst, bei Anliegen einer Gleichspannung wird der Gleichstromwiderstand erfasst bzw. überwacht.

Im bestimmungsgemäßen Gebrauch der Schutzeinrichtung wird der Sicherheitsüberzug derart über dem Bauteil angebracht, dass die Trägerschicht die Kollisionsschutzfläche kontaktiert, wobei der Sicherheitsüberzug derart angeordnet ist, dass von ihm, insbesondere von der Detektionsschicht, die Kollisionsschutzfläche flächig überspannt ist. Zum Beispiel kann vorgesehen sein, dass von dem Sicherheitsüberzug eine Fläche des Bauteils (z. B. die gesamte Oberfläche des Bauteils) einschließlich Rundungen, Schrägen, Ecken und/oder Kanten derselben flächig überspannt ist.

Indem die mit einem Sicherheitsüberzug zu versehende Kollisionsschutzfläche dem Bauteil formangepasst überspannt ist, kann bei beliebiger Form der Kollisionsschutzfläche eine formangepasste, flächige Kollisionsschutzeinrichtung realisiert werden, sodass bei minimaler Gewichtszunahme ein sowohl passiver - mittels der Stoßabsorptionsschicht - als auch aktiver Schutz - mittels der Kollisionserfassung und der damit verbundenen Auswerteeinheit - bei Kollisionen gewährleistbar ist.

Ein mit dem Bauteil kollidierender Kollisionspartner kann ein beliebiger Gegenstand oder Körper und insbesondere auch ein Lebewesen wie z. B. eine Person sein. Ein Kollisionspartner kann auch ein Körperteil eines Lebewesens, z. B. eine Hand oder ein Finger einer Person, sein.

Bei einer Kollision des Bauteils mit einem Kollisionspartner tritt die Außenhülle mit dem jeweiligen Kollisionspartner in Wechselwirkung und überträgt den Kollisionsdruck bzw. die Kollisionskraft (direkt) auf die elastisch komprimierbare Stoßabsorptionsschicht. Zu Beginn der Kollision erfolgt durch die Komprimierung der Stoßabsorptionsschicht ein passiver Kollisionsschutz. Wird der Kollisionspartner hierdurch nicht ausreichend abgebremst, überträgt die Stoßabsorptionsschicht den Kollisionsdruck bzw. die Kollisionskraft, entweder direkt oder mittels der elastisch verformbaren Elektrode der Oberseite, weiter auf den elastisch verformbaren Abstandhalter. Dieser gibt elastisch nach, wobei sich die Elektroden der Ober- und der Unterseite der Detektionsschicht annähern. Entsprechend der Elastizität des Abstandhalters wird dieser eingedrückt bzw. zusammengepresst, wobei aufgrund der geringeren Elastizität des Abstandhalters im Bereich der Unterseite die auf den Kollisionspartner einwirkende Gegenkraft mit zunehmender Kompressionstiefe zunimmt. Somit ist sichergestellt, dass der Kollisionspartner zunächst sanft, aber dennoch zuverlässig abgebremst wird. Die Außenhülle bewirkt dabei eine Vergleichmäßigung bzw. flächige Verteilung des Kollisionsdrucks.

Durch das Eindrücken der Abstandhalter nähern sich innerhalb der Hohlräume die obere und untere Elektrode, wobei sie sich schließlich, d. h. bei vollständiger Komprimierung des Abstandhalters, berühren. Diese Berührung wiederum hat zur Folge, dass der zwischen beiden Elektroden ausgebildete elektrische Widerstand schlagartig geringer wird. Diese Änderung kann erfasst und mittels der dafür vorgesehenen Auswerteeinheit ausgewertet werden. Von der Auswerteeinheit kann bei Erfassen bzw. Erkennen einer Kollision z. B. ein Warnsignal und/oder ein Steuerungsbefehl an z. B. einen mit einem angetrieben bewegbaren Bauteil verbundenen Motor ausgegeben werden.

Gemäß einer Ausführungsform bestehen die Abstandhalter aus einem Abstandstextil - auch als Abstandsgewirk bekannt. Die beiden durch abstandshaltende Verbindungsfäden, sogenannte Polfäden, auf Distanz gehaltenen, gewirkten Warenflächen bzw. textilen Deckflächen des Abstandstextils weisen erfindungsgemäß eine unterschiedliche Härte auf. Die Warenfläche an der Unterseite besteht vorzugsweise aus einem aus dem Stand der Technik bekannten, nachbehandeltem Polyester. Die Warenfläche an der Oberseite hingegen ist vorzugsweise aus einem unbehandelten Polyester gewirkt, der hierdurch vergleichsweise weich bleibt. Die bevorzugte Dicke des Abstandskörpers bei Verwendung eines Abstandstextils beträgt etwa 1 cm.

Gemäß einer alternativen Ausführungsform besteht der Abstandhalter aus Schaummaterial, z. B. Polyurethan-Weichschaum, dessen Porengröße bevorzugt wenigstens 1 mm im Durchmesser beträgt, sodass das Gewicht der Abstandhalter aufgrund des vergleichsweise großen Porendurchmessers gering bleibt.

Gemäß dieser Ausführungsform kann vorgesehen sein, dass die mittlere Porengröße von der Unterseite des Abstandhalters in Richtung zu der Oberseite zunimmt, wobei die Zunahme der mittleren Porengröße insbesondere weitestgehend stetig verlaufen kann.

Gemäß dieser Ausführungsform kann jedoch auch vorgesehen sein, dass der Abstandhalter aus wenigstens zwei, scharf gegeneinander abgegrenzten, stoffschlüssig miteinander verbundenen Schichten Polyurethan-Weichschaum besteht, wobei jede Schicht eine im Vergleich zur benachbarten Schicht unterschiedliche Elastizität aufweist. In vorteilhafter Weise weist eine an der Unterseite der Detektionsschicht angeordnete erste Weichschaum-Schicht des Abstandhalters eine geringere Elastizität auf als eine zweite, an der Oberseite der Detektionsschicht angeordnete Weichschaum-Schicht des Abstandhalters. Insbesondere kann vorgesehen sein, dass die mittlere Porengröße der Schicht des Abstandhalters an der Unterseite der Detektionsschicht kleiner ist als die mittlere Porengröße der Schicht an der Oberseite.

Gemäß einer Ausführungsform besteht die Außenhülle aus einem elastisch verformbaren Material, z. B. aus einem (im Wesentlichen) inkompressiblen elastisch verformbaren Material. Zum Beispiel kann die Außenhülle aus einem elastisch verformbaren Material wie Echt- oder Kunstleder bestehen.

Es kann auch vorgesehen sein, die Außenhülle aus einem elastisch komprimierbaren Material, z. B. aus einem Schaummaterial oder einem gummielastischen Material, auszubilden. Gemäß dieser Ausführungsform kann die Außenhülle bei einer Kollision als dämpfendes, kraftaufnehmendes Element zum Schutz des Kollisionspartners vor Beschädigung wirken.

Gemäß einer Ausführungsform weist die Außenhülle eine geringere Elastizität auf als der Abstandskörper, verformt sich also bei gleicher Druckeinwirkung weniger als der Abstandskörper. Zum Beispiel kann das Material der Außenhülle einen größeren Kompressionsmodul aufweisen als das Material des Abstandskörpers.

Bevorzugt ist die Außenhülle ein mit 2K-PU-Lack beschichteter, elastisch verformbarer Polyurethan-Weichschaum, ein Kunstleder oder ein Textilstoff, wobei letztere zusätzlich noch lackiert oder beschichtet sein können.

Die Erfindung kann weiter derart ausgebildet sein, dass die Elektroden eine elektrisch leitfähige Folie aus einem Kunststoff, z. B. Polyethylen, einem Silikon oder einem Polyurethan-Weichschaum sind, in die jeweils ganzflächig oder in dedizierten Bereichen, z. B. mäandrierende Bahnen, Graphit eingebracht ist. Auch können die Elektroden der Oberseite und/oder Unterseite als z. B. verwebte leitfähige Fäden, beispielsweise Metallfäden oder dünne Drähte, vorliegen.

Gemäß dieser Ausführungsform sind die Hohlräume der Detektionsschicht zwischen den Abstandhaltern ausgebildet, während z. B. die folienartigen Elektroden auf und/oder unter den Abstandhaltern angeordnet sind.

Die Elektroden können auch in Form von schmalen Leiterbahnen oder Drähten vorliegen, die in Form eines Musters, z. B. als Mäander oder Gitter, zwischen den Abstandhaltern verlegt sind. Insbesondere kann vorgesehen sein, die oberen Elektroden in Form von Drähten zwischen den oder mäandrierend um die Abstandhalter und die unteren Elektroden in Form von Drähten kreuzweise zu den oberen Elektroden, z. B. ebenfalls mäandrierend um die Abstandhalter, anzuordnen. Durch diese zueinander kreuzweise Anordnung der oberen und unteren Elektrodenbahnen ist ein sicherer Kontakt zwischen den oberen und unteren Elektroden im Falle einer Kollision gewährleistet.

Alternativ hierzu kann die Erfindung derart ausgebildet sein, dass die Elektroden, z. B. als Drähte oder Leiterbahnen, innerhalb von Hohlräumen in den Abstandhaltern verlaufen. D. h., die Abstandhalter sind innen hohl, wobei sie beispielsweise innerhalb der Detektionsschicht mäandrierend oder als zueinander parallel ausgerichtete Hohlzylinder angeordnet sind. Die Elektroden werden somit von den elastisch komprimierbaren Abstandhaltern eingeschlossen, wobei bei einer Kollision die Abstandhalter komprimiert werden und sich dadurch die innerhalb der Hohlräume in den Abstandhaltern verlaufenden oberen und unteren Elektroden gegenseitig kontaktieren.

Weiterhin kann vorgesehen sein, dass die Elektroden extrudierte Drähte sind, die aus einem elastisch komprimierbaren, elektrisch leitfähigen Material bestehen. Beispielsweise können die Elektroden aus mit Graphit versetztem Polyurethan-Weichschaum oder Silikon bestehen, wobei sie zusätzlich für eine verbesserte Leitfähigkeit eine z. B. metallische Drahtseele besitzen können.

Es kann auch vorgesehen sein, den Sicherheitsüberzug entsprechend einer geometrischen Außenkontur des Bauteils auszuformen, sodass der Sicherheitsüberzug formschlüssig auf dem Bauteil bzw. dessen Kollisionsschutzfläche aufbringbar ist, ohne ihn übermäßig verbiegen zu müssen.

Zur besseren Haftung bzw. Fixierung des Sicherheitsüberzuges auf dem Bauteil kann an der Unterseite, d. h. Innenfläche, des Sicherheitsüberzuges auf der Trägerschicht ein rutschfester Belag angeordnet sein, wobei dieser rutschfeste Belag zur besseren Belüftung auch nur an eng begrenzten, vorgegebenen Positionen, z. B. punktweise, aufgebracht sein kann. Es kann auch vorgesehen sein, dass die Trägerschicht selbst, zumindest an ihrer Unterseite, aus einem rutschfesten Material, z. B. Gummi oder Polyurethanschaum, besteht.

Gemäß einer Ausführungsform sind die Befestigungsmittel auf oder an der Außenhülle angebracht. Die Befestigungsmittel sind z. B. als Klettverschlüsse oder als allgemein bekannte Schnappverschlüsse ausgebildet, mittels derer ein einstückiger Sicherheitsüberzug z. B. in einer Hohlzylinderform fixierbar oder mehrere Sicherheitsüberzüge z. B. zu einem Hohlzylinder zusammenfügbar sind. Zusätzlich oder alternativ kann die Außenhülle zur Befestigung des Sicherheitsüberzuges direkt auf dem Bauteil auf demjenigen Oberflächenbereich, der mit dem Bauteil in Kontakt kommt, mehrere kleinflächige Befestigungsmittel, z. B. Druckknöpfe, aufweisen.

Die Erfindung wird nachfolgend anhand von Ausführungsbeispielen mit Bezug auf die beiliegenden Zeichnungen erläutert, wobei gleiche oder ähnliche Merkmale mit gleichen Bezugszeichen versehen sind; hierbei zeigen schematisch:
- Figur 1: eine Darstellung einer Schutzeinrichtung mit dem Sicherheitsüberzug im Querschnitt gemäß einer ersten Ausführungsform der Erfindung;
- Figur 2: eine Darstellung einer Schutzeinrichtung mit dem Sicherheitsüberzug im Querschnitt gemäß einer zweiten Ausführungsform; und
- Figur 3: ein Detail des Sicherheitsüberzuges gemäß der zweiten Ausführungsform im Längsschnitt.

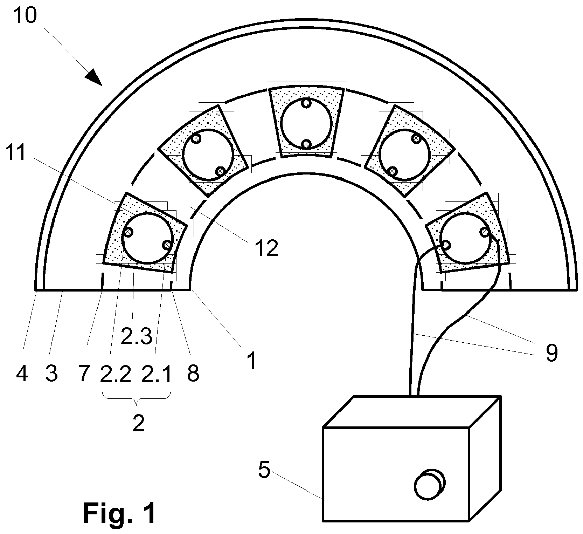

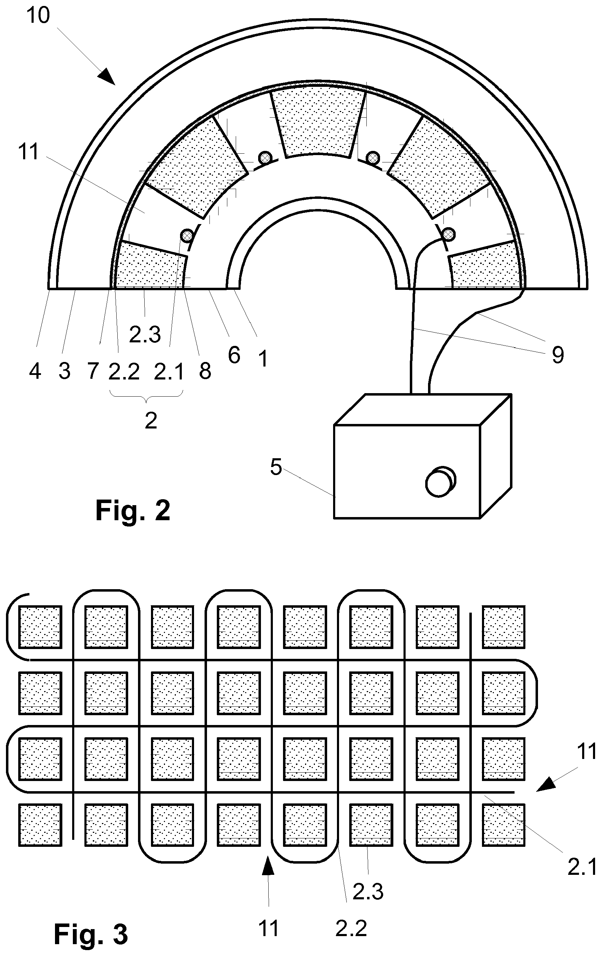

Gemäß den Figuren 1 und 2 weist die Schutzeinrichtung den im Querschnitt dargestellten Sicherheitsüberzug 1 sowie die perspektiv dargestellte Auswerteeinheit 5 auf.

Der Sicherheitsüberzug 1 umfasst die auf eine Kollisionsschutzfläche (nicht dargestellt) aufbringbare Trägerschicht 1, die Detektionsschicht 2, den auf der Oberseite 7 der Detektionsschicht 2 angeordneten Stoßabsorptionskörper 3 sowie die elektrisch isolierende Außenhülle 4, die den Stoßabsorptionskörper 3 einhüllt. Die Detektionsschicht 2 umfasst die im Bereich ihrer Unterseite 8 angeordneten unteren Elektroden 2.1 und die im Bereich ihrer Oberseite 7 angeordneten oberen Elektroden 2.2 sowie die elastisch komprimierbaren Abstandhalter 2.3. Die Elektroden 2.1 und 2.2 sind mittels der elektrischen Leitungen 9 mit der Auswerteeinheit 5 verbunden.

Die Abstandhalter 2.3 der Detektionsschicht 2 gemäß Figur 1 sind als Hohlzylinder mit dem Hohlraum 11 ausgebildet und bestehen aus einem Polyurethan-Weichschaum, der eine geringere Elastizität aufweist als der Polyurethan-Weichschaum des Stoßabsorptionskörpers 3. Innerhalb des Hohlraumes 11 der Abstandhalter 2.3 verlaufen die jeweils drahtförmigen unteren (2.1) und oberen (2.2) Elektroden. Die einzelnen Abstandhalter 2.3 sind durch weitere Hohlräume 12 voneinander beabstandet.

Der in Fig. 2 gezeigte Sicherheitsüberzug 10 besitzt zusätzlich die zwischen der Detektionsschicht 2 und der Trägerschicht 1 angeordnete Hinterfütterungsschicht 6 aus einem elastisch komprimierbaren Weichschaum. Gemäß der in Fig. 2 dargestellten Ausführungsform des Sicherheitsüberzuges umfasst die Detektionsschicht 2 die an ihrer Unterseite 8 angeordneten, drahtförmigen unteren Elektroden 2.1 und die an ihrer Oberseite 7 angeordneten, drahtförmigen oberen Elektroden 2.2 sowie die elastisch komprimierbaren Abstandhalter 2.3, welche durch die Hohlräume 11 voneinander getrennt sind.

Die Abstandhalter 2.3 gemäß Figur 2 bestehen aus einem Abstandstextil, dessen Warenfläche an der Oberseite 7 der Detektionsschicht 2 eine geringere Härte aufweist als dessen Warenfläche an der Unterseite 8 der Detektionsschicht 2.

Figur 3 zeigt die Anordnung der unteren Elektroden 2.1, der oberen Elektroden 2.2 und der Abstandhalter 2.3 im Längsschnitt. Die unteren Elektroden 2.1 und die oberen Elektroden 2.2 verlaufen kreuzweise zueinander, jeweils mäandrierend innerhalb der Hohlräume 11 zwischen den Abstandhaltern 2.3.

### Liste der verwendeten Bezugszeichen

- 1: Trägerschicht
- 2: Detektionsschicht
- 2.1: untere Elektrode
- 2.2: obere Elektrode
- 2.3: Abstandhalter
- 3: Stoßabsorptionskörper
- 4: Außenhülle
- 5: Auswerteeinheit
- 6: Hinterfütterungsschicht
- 7: Oberseite
- 8: Unterseite
- 9: elektrische Verbindung
- 10: Sicherheitsüberzug
- 11: Hohlraum
- 12: Hohlraum

## Patentansprüche

1. Schutzeinrichtung mit taktiler Kollisionserfassung für ein Bauteil zur Überwachung einer Kollision in Bezug auf das Bauteil, aufweisend einen zumindest auf einen Teil der Oberfläche des Bauteils formangepasst aufbringbaren Sicherheitsüberzug (10) und eine Auswerteeinheit (5), wobei
- der Sicherheitsüberzug (10) als Sandwichstruktur aufgebaut ist, die eine einteilige, flächenhaft ausgebildete Trägerschicht (1), eine elastisch komprimierbare Detektionsschicht (2) mit einer Oberseite (7) und einer der Oberseite (7) gegenüberliegenden Unterseite (8), einen mit der Detektionsschicht (2) an ihrer Oberseite (7) verbundenen Stoßabsorptionskörper (3) aus einem elastisch komprimierbaren Material und eine flüssigkeitsdichte Außenhülle (4) umfasst;
- wobei innerhalb der Detektionsschicht (2) im Bereich ihrer Oberseite (7) eine oder mehrere obere Elektroden (2.2) und im Bereich ihrer Unterseite (8) eine oder mehrere, von den oberen Elektroden (2.2) durch Hohlräume (11) beabstandete untere Elektroden (2.1) angeordnet sind, und
- die Detektionsschicht (2) von ihrer Unterseite (8) zu ihrer Oberseite (7) verlaufende, elastisch komprimierbare Abstandhalter (2.3) umfasst,
- die Auswerteeinheit (5) mit den unteren und oberen Elektroden (2.1, 2.2) der Detektionsschicht (2) elektrisch verbunden ist, wobei von der Auswerteeinheit (5) eine elektrische Spannung auf zumindest eine der Elektroden (2.1, 2.2) aufbringbar ist, und
- wobei die Auswerteeinheit (5) eingerichtet ist, eine Änderung des zwischen den Elektroden (2.1) der Unterseite (8) und den Elektroden (2.2) der Oberseite (7) ausgebildeten elektrischen Widerstandes zu erfassen,
**dadurch gekennzeichnet, dass**
die Abstandhalter (2.3) im Bereich der Unterseite (8) der Detektionsschicht (2) eine geringere Elastizität aufweisen als im Bereich der Oberseite (7) der Detektionsschicht (2).

2. Schutzeinrichtung nach Anspruch 1, **dadurch gekennzeichnet, dass** die Abstandhalter (2.3) aus einem Abstandstextil bestehen, dessen Warenfläche an der Unterseite (8) eine größere Härte aufweist als dessen Warenfläche an der Oberseite (7).

3. Schutzeinrichtung nach Anspruch 1, **dadurch gekennzeichnet, dass** die Abstandhalter (2.3) aus einem Verbund aus einer an der Unterseite (8) der Detektionsschicht (2) angeordneten ersten und einer an der Oberseite (7) der Detektionsschicht (2) angeordneten zweiten Schaumschicht bestehen, wobei die erste Schaumschicht eine geringere Elastizität aufweist als die zweite Schaumschicht.

4. Schutzeinrichtung nach Anspruch 1, **dadurch gekennzeichnet, dass** die Abstandhalter (2.3) aus einem Schaummaterial bestehen, dessen Porengröße wenigstens 1 mm im Durchmesser beträgt, wobei die mittlere Porengröße von der Unterseite (8) der Detektionsschicht (2) in Richtung zu der Oberseite (7) der Detektionsschicht (2) stetig zunimmt.

5. Schutzeinrichtung nach einem der Ansprüche 1 bis 4, **dadurch gekennzeichnet, dass** die Außenhülle (4) aus einem elastisch verformbaren Polyurethan-Weichschaum, dessen äußere Oberfläche eine Deckschicht aus hochflexiblem 2K-PU-Lack aufweist, oder aus einem Leder besteht.

6. Schutzeinrichtung nach einem der Ansprüche 1 bis 5, **dadurch gekennzeichnet, dass** die unteren Elektroden (2.1) parallel zueinander ausgerichtete Leiterbahnen sind, wobei die Leiterbahnen mäandrierend um die Abstandhalter (2.3) verlaufen.

7. Schutzeinrichtung nach einem der Ansprüche 1 bis 5, **dadurch gekennzeichnet, dass** die Hohlräume (11) der Detektionsschicht (2) innerhalb der Abstandhalter (2.3) ausgebildet sind, wobei die unteren Elektroden (2.1) sowie die oberen Elektroden (2.2) parallel zueinander ausgerichtete Leiterbahnen sind, die in den Hohlräumen (11) der Abstandhalter (2.3) verlaufen.

8. Schutzeinrichtung nach einem der vorstehenden Ansprüche, **dadurch gekennzeichnet, dass** die Elektroden (2.1, 2.2) extrudierte Drähte aus mit Graphit versetztem Polyurethan-Weichschaum oder Silikon sind, die eine metallische Drahtseele besitzen.

9. Schutzeinrichtung nach einem der vorstehenden Ansprüche, **dadurch gekennzeichnet, dass** von der Auswerteeinheit (5) eine elektrische Wechselspannung auf die leitfähigen Bereiche (2.1, 2.2) aufbringbar und eine Änderung des Wechselstromwiderstandes zwischen den oberen (2.2) und den unteren (2.1) Elektroden erfassbar ist.

10. Schutzeinrichtung nach einem der vorstehenden Ansprüche, **dadurch gekennzeichnet, dass** der Sicherheitsüberzug (1) eine zwischen der Detektionsschicht (2) und der Trägerschicht (1) angeordnete Hinterfütterungsschicht (6) aus einem elastisch komprimierbaren Material umfasst.
